# EUROPEAN PATENT APPLICATION

(11) **EP 1 176 852 A2**
(43) Date of publication of application: **30.01.2002**
(21) Application number: 01116759.0
(22) Date of filing: 19.07.2001
(51) Int. Cl.: H05B 41/02, H05B 41/285

(54) **High-frequency electronic converter, particularly for supplying power to cold-cathode lamps**

(30) Priority: 28.07.2000 IT TV000088
(71) Applicant: Setech S.r.l., 33080 Fiume Veneto (IT)
(72) Inventor: Martin, Fausto, 31046 Oderzo (Prov. of Treviso) (IT); Brollo, Andrea, 31044 Montebelluna (Prov. of Treviso) (IT)
(74) Representative: Modiano, Guido, Dr.-Ing.

(57) **Abstract**

A high-frequency electronic converter (1), particularly for supplying power to cold-cathode lamps, which is constituted by a first body (2) adapted to be associated with at least two electrical cables (4) for output from an electronic or electromagnetic circuit, the first body having a temporary connection for a second body (15) which is associated with one or more input cables (16).

## Description

The present invention relates to a high-frequency electronic converter, particularly for supplying power to cold-cathode lamps.

Currently, several known kinds of high-frequency electronic converters are used in applications related to the field of power supplies for high-frequency neon lamps; such converters can be used to supply power to cold-cathode lamps filled with neon gas or with other mixtures based on noble gases, such as for example lamps filled with argon, krypton, helium, xenon and possibly mercury vapors.

These known electronic converters have various shapes and dimensions but are all affected by problems in terms of electrical insulation of the output circuit caused by the presence of the high voltage required to trigger said cold-cathode lamps.

For this reason, all known types of electronic converter are subjected to a resin casting step, in which the entire circuit of the electronic converter, or at least the high-voltage secondary winding, are fully or partially impregnated with single- or multiple-component resins optionally provided with inert materials as fillers.

The casing that contains the electronic or electromagnetic circuit must be filled in high vacuum conditions, so as to avoid the accumulation of humidity in the interstices, which would in fact cause rapid failure of the converter.

The most widely used known system for limiting the accumulation of humidity in the secondary winding during resin casting consists in facilitating, before the vacuum step, the evacuation of the humidity by heating the windings of the electronic converter: this however causes the thermal expansion of the windings, consequently reducing the interstices where such humidity might accumulate.

The step of heating and resin-casting the electronic converters usually occurs when the converter is already complete with input and output cables, so as to make the cables monolithic with the converter in a single operation.

However, this method has the disadvantage of having to handle, during those steps, not only the converter but also the bulky appendages of the input and output cables.

Accordingly, there is the disadvantage of the fact of having a production cycle which is difficult and not entirely efficient, especially in operations for product handling, cable movement during resin casting and during the outflow of the resin.

All this entails long production times with a consequent cost increase.

There is also the drawback of having to resort to sealing gaskets at the regions where the cables exit, so as to limit resin casting to the space inside the casing of the converter.

Another disadvantage of conventional converters is that it is practically impossible to provide the electronic converter with moving parts suitable to adjust the operating parameters, such as for example luminous intensity, secondary current, duty cycle or frequency variation, since the moving parts would in turn have to be hermetic and the product would therefore be very expensive.

The aim of the present invention is therefore to solve the above noted technical problems and eliminate the drawbacks of the cited prior art by providing an electronic converter which can be obtained with a production cycle which is efficient and fast and is particularly optimized in the operations for handling the product before and after the resin casting step.

Within this aim, an object of the present invention is to provide a high-frequency electronic converter that does not require the use of sealing gaskets at the exit regions of the cables.

Another object is to be able to provide the electronic converter with moving parts, such as for example devices for adjusting luminous intensity, secondary current, duty cycle or frequency variation, which can be produced at a low cost.

A further object is to provide an invention which is structurally simple, reliable and safe in use and has low manufacturing costs.

This aim and these and other objects which will become better apparent hereinafter are achieved by a high-frequency electronic converter, particularly for supplying power to cold-cathode lamps, characterized in that it is constituted by a first body which is adapted to be associated with at least two electrical cables for output from an electronic or electromagnetic circuit, said first body having a temporary connection for a second body with which one or more input cables are associated.

Further characteristics and advantages of the invention will become better apparent from the detailed description of a particular embodiment, illustrated only by way of non-limitative example in the accompanying drawings, wherein:
Figure 1 is a perspective view of the converter according to the invention;
Figure 2 is a sectional side view of an L-shaped contact pin for connecting an electrical output cable to the converter of the invention.

With reference to the figures, the reference numeral 1 designates a high-frequency electronic converter, particularly suitable for supplying power to cold-cathode lamps.

The converter comprises a first body, designated by the reference numeral 2, which is advantageously shaped like a parallelepiped and contains an electronic or electromagnetic circuit.

The first body 2 comprises an electronic unit proper and has, at a first end thereof designated by the reference numeral 3, a connection for example to a pair of electrical output cables 4 for sending high-voltage current arriving from the secondary electric circuit.

The connection between the pair of output cables 4 and the first body 2 is advantageously provided, as shown in Figure 2, by using conical L-shaped contact pins 5 threaded at one end, each of which is connected to the printed circuit, designated by the reference numeral 6, and is partially immersed in a resin 7 in its part arranged inside the first body 2.

Each one of the L-shaped contact pins 5 therefore has a threaded projection 8 which protrudes externally from the first end 3 of the first body 2 at a central axis of a suitable seat, designated by the reference numeral 9, which is preferably cylindrical or advantageously conical, so as to be substantially counter-shaped to the free end 10 of the input cable 4.

Each one of the pair of output cables 4 is constituted by an external insulating sheath, designated by the reference numeral 11, being conveniently made of elastically compressible material and inside which an electrical conductor 12 is arranged coaxially; the free end 10 of the output cable 4 is screwed onto the threaded projection 8 for connection thereto.

In this manner, a mutual connection which requires no resin-tight gaskets is provided, because the seal is ensured by the compression of the external insulating sheath 11 against the side walls of the seat 9, such compression being imposed during the screwing of the input cable onto the threaded projection 8 and being due to the slightly conical shape of the seat 9.

Advantageously, the first body 2 has at a second end thereof, designated by the reference numeral 14, a temporary connection for a second body 15 which is preferably not resin-cast.

An electrical input cable, designated by the reference numeral 16, for sending low-voltage current to the primary electric circuit is associated with the second body 15.

The second body 15 can comprise internally one or more devices, for example a rocker or chain-pull switch, a regulator for luminous intensity, secondary current, duty cycle or frequency variation: this allows to provide the first body 2, which includes the electronic unit proper, regardless of the various characteristics and different functions that the converter has to have in each instance.

The connection of the input cable 16 to the second body 15 is advantageously provided by means of mechanical systems of a known type, since the second body 15 is not resin-cast.

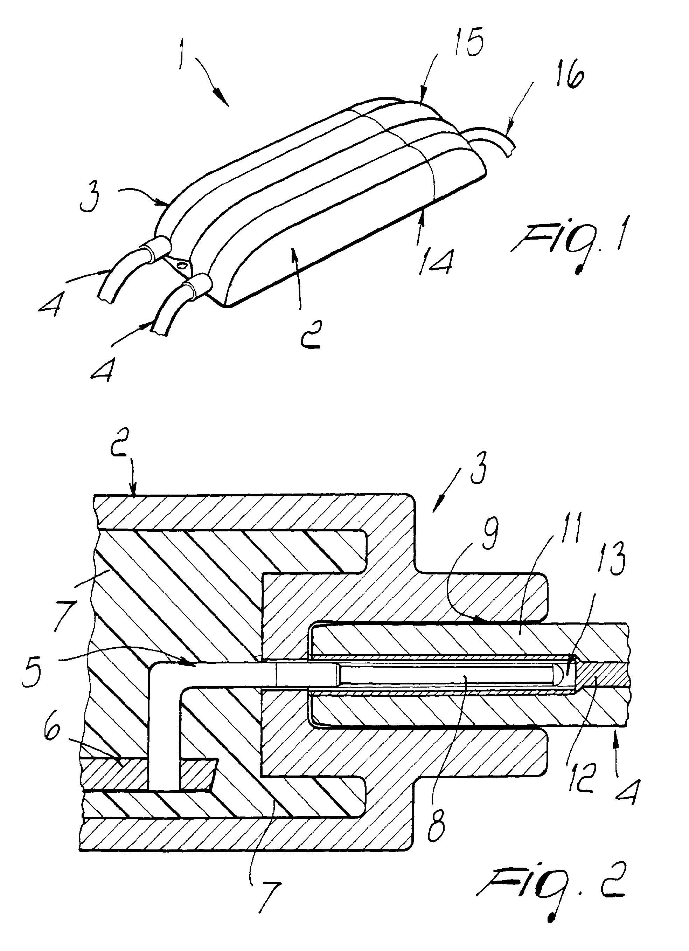

Use of the invention is therefore as follows: with reference to Figure 1, the first body 2 is connected to the second body 15, advantageously by means of a pin-type socket, further associating the output cables 4 and the input cable 16 respectively with the first and second bodies 2 and 15.

The type of second body is selected case by case, specifically for each application, according to the required characteristics: in order to facilitate this operation, it is possible for example to assign a different color to each different type of second body 15, so as to facilitate its selection and use according to specific intended characteristics.

It has thus been found that the invention has achieved the intended aim and objects, an electronic converter having been devised which can be obtained by means of an efficient and rapid production cycle which is particularly optimized in the operations for handling the product before and after the resin-casting step.

The electronic converter in fact comprises a second body, provided with appropriate specific and intended functions and characteristics, which is easily interchangeable with the first body.

In this manner, the parts held in stock by the manufacturer and the retailer are reduced in number, and the manufacturer and retailer need not hold in stock various types of different converters but need only a supply of a single type of circuit contained in the first body and of various second bodies having different and specific characteristics; the second bodies, being mutually interchangeable, provide the user with a complete range of solutions in combination with the first body.

One application which illustrates the advantages of the invention is the fact that the electronic converters can operate, for an equal value of primary current, with various different secondary currents: accordingly, since the second body is interchangeable, all the commercially known combinations of different electronic converters are no longer necessary, because it is sufficient to use, on a first standard body, the second body that is most suitable for the application, consequently reducing the types of converters that are manufactured, distributed and held in stock.

The same applies also in facing the problem of using plugs of electrical products which are different according to the country in which they are marketed: in this case also, the first body remains the same and only the second body changes.

The converter according to the invention is susceptible of numerous modifications and variations, all of which are within the scope of the same inventive concept.

Thus, for example, the number and type of cables associated with the first or second body can vary according to specific requirements.

The materials used and the dimensions that constitute the individual components of the invention may of course be more pertinent according to the specific requirements.

The disclosures in Italian Patent Application No. TV2000A000088 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A high-frequency electronic converter, particularly for supplying power to cold-cathode lamps, **characterized in that** it is constituted by a first body which is adapted to be associated with at least two electrical cables for output from an electronic or electromagnetic circuit, said first body having a temporary connection for a second body with which one or more input cables are associated.

2. The electronic converter according to claim 1, **characterized in that** said first body internally comprises an electronic or electromagnetic circuit which is constituted by an electronic unit proper and has, at a first end, a connection to said at least two electrical output cables which carry high-voltage current from a secondary electric circuit to a load constituted by cold-cathode lamps.

3. The electronic converter according to claim 2, **characterized in that** said connection between each of said output cables and said first body is provided by using a conical L-shaped contact pin threaded at one end which is connected to a printed circuit of said electronic or electromagnetic circuit and is partially immersed in resin in its part arranged inside said first body.

4. The electronic converter according to claim 3, **characterized in that** said L-shaped contact pin has a threaded projection which protrudes out of said first end of said first body at a central axis of a seat, which is shaped complementarily to the free end of said output cable.

5. The electronic converter according to one or more of the preceding claims, wherein each one of said two output cables is constituted by an outer insulating sheath, inside which an electrical conductor is arranged coaxially, **characterized in that** said free end of said output cable is screwed onto it, so as to provide a resin-tight seal by compressing said outer insulating sheath against the side walls of said seat, said compression being imposed during the screwing action itself.

6. The electronic converter according to claim 1, **characterized in that** the temporary connection of said first body for said second body is arranged at a second end of said first body which is opposite to the first end.

7. The electronic converter according to claim 1, **characterized in that** the electrical input cable associated with said second body is connected to the primary electric circuit by way of mechanical systems.

8. The electronic converter according to one or more of the preceding claims, **characterized in that** said second body comprises internally one or more devices for activating or regulating its operation.

9. The electronic converter according to one or more of the preceding claims, **characterized in that** said second body comprises internally a switch.

10. The electronic converter according to one or more of the preceding claims, **characterized in that** said second body comprises internally a luminous intensity regulator.

11. The electronic converter according to one or more of the preceding claims, **characterized in that** said second body comprises internally a secondary current regulator.

12. The electronic converter according to one or more of the preceding claims, **characterized in that** said second body comprises internally a frequency variation regulator.

13. The electronic converter according to one or more of the preceding claims, **characterized in that** said second body comprises internally a duty cycle regulator.

14. The electronic converter according to one or more of the preceding claims, **characterized in that** said first body is resin-cast together with, or is associated with, two electrical output cables.
